# EUROPEAN PATENT APPLICATION

(11) **EP 4 596 349 A1**
(43) Date of publication of application: **06.08.2025**
(21) Application number: 23771930.7
(22) Date of filing: 18.08.2023
(51) Int. Cl.: B60W 30/16

(54) **CONTROL DEVICE FOR SADDLED VEHICLE RIDER ASSISTANCE SYSTEM, AND CONTROL METHOD**

(30) Priority: 30.09.2022 JP 2022157207
(71) Applicant: Robert Bosch GmbH, 70442 Stuttgart (DE)
(72) Inventor: PFAU, Lars, Yokohama-shi, Kanagawa 224-8501 (JP)
(74) Representative: Isarpatent
(86) International application number: PCT/IB2023/058281
(87) International publication number: WO 2024/069271

(57) **Abstract**

The invention obtains a controller and a control method capable of improving assistance performance for a rider.

A controller for a rider-assistance system of a straddle-type vehicle (100) includes an execution section executing rider-assistance operation to assist a rider of an own vehicle (100) on the basis of positional relationship information between the own vehicle (100) and a target, and further includes an acquisition section acquiring positional information of the own vehicle (100) in a group in the case where a group travel mode as a mode in which a group formed of plural straddle-type vehicles (300), including the own vehicle (100), travel in plural vehicle lines (C1, C2) in a single lane (L) is determined to be valid. In the case where it is determined that the group travel mode is valid, the execution section executes the rider-assistance operation on the basis of the positional information acquired by the acquisition section.

## Description

### Technical Field

The present invention relates to a controller for a rider-assistance system of a straddle-type vehicle and a control method for the rider-assistance system of the straddle-type vehicle.

### Background Art

As a conventional rider-assistance system of a straddle-type vehicle, there is a rider-assistance system that executes rider-assistance operation to assist a rider of an own vehicle on the basis of positional relationship information between the own vehicle and a target (for example, see PTL 1).

### Citation List

### Patent Literature

PTL 1: WO2018/172870A1

### Summary of Invention

### Technical Problem

A vehicle body of the straddle-type vehicle is much smaller than those of other vehicles (for example, a passenger car, a truck, and the like). For this reason, such a situation possibly occurs where a group formed of plural straddle-type vehicles, including the own vehicle, travels in plural vehicle lines in a single lane. In such a situation, it may be difficult for the conventional rider-assistance system to execute the appropriate rider-assistance operation.

The invention has been made with the above-described problem as the background and therefore obtains a controller capable of improving assistance performance for a rider. The invention also obtains a control method capable of improving the assistance performance for the rider.

### Solution to Problem

A controller according to the invention is a controller for a rider-assistance system of a straddle-type vehicle, includes an execution section that executes rider-assistance operation to assist a rider of an own vehicle on the basis of positional relationship information between the own vehicle and a target, and further includes an acquisition section that acquires positional information of the own vehicle in a group in the case where a group travel mode as a mode in which a group formed of plural straddle-type vehicles, including the own vehicle, travels in plural vehicle lines in a single lane is determined to be valid. In the case where it is determined that the group travel mode is valid, the execution section executes the rider-assistance operation on the basis of the positional information acquired by the acquisition section.

A control method according to the invention is a control method for a rider-assistance system of a straddle-type vehicle, includes an execution step in which an execution section of a controller executes rider-assistance operation to assist a rider of an own vehicle on the basis of positional relationship information between the own vehicle and a target, and further includes an acquisition step in which an acquisition section of the controller acquires positional information of the own vehicle in a group in the case where a group travel mode as a mode in which a group formed of plural straddle-type vehicles, including the own vehicle, travels in plural vehicle lines in a single lane is determined to be valid. In the execution step, in the case where it is determined that the group travel mode is valid, the execution section executes the rider-assistance operation on the basis of the positional information acquired in the acquisition step.

### Advantageous Effects of Invention

In the controller and the control method according to the invention, in the case where the group travel mode as the mode in which the group formed of the plural straddle-type vehicles, including the own vehicle, travels in the plural vehicle lines in the single lane is determined to be valid, the rider-assistance operation is executed on the basis of the positional information of the own vehicle in the group. Therefore, in a situation where the group formed of the plural straddle-type vehicles, including the own vehicle, travels in the plural vehicle lines in the single lane, it is possible to execute the appropriate rider-assistance operation and thus to improve assistance performance for the rider.

### Brief Description of Drawings

Fig. 1 is a view illustrating a mounted state of a rider-assistance system according to an embodiment of the invention to a straddle-type vehicle.
Fig. 2 is a diagram illustrating a system configuration of the rider-assistance system according to the embodiment of the invention.
Fig. 3 is a view for explaining a configuration of the rider-assistance system according to the embodiment of the invention.
Fig. 4 is a view for explaining the configuration of the rider-assistance system according to the embodiment of the invention.
Fig. 5 is a view for explaining the configuration of the rider-assistance system according to the embodiment of the invention.
Fig. 6 is a view for explaining the configuration of the rider-assistance system according to the embodiment of the invention.
Fig. 7 is a view for explaining the configuration of the rider-assistance system according to the embodiment of the invention.
Fig. 8 is a chart for explaining an operation flow of a controller in the rider-assistance system according to the embodiment of the invention.

### Description of Embodiments

A description will hereinafter be made on a controller and a control method according to the invention with reference to the drawings.

A configuration, operation, and the like, which will be described below, merely constitute one example, and the controller and the control method according to the invention are not limited to a case with such a configuration, such operation, and the like.

For example, a description will hereinafter be made on a case where the controller and the control method according to the invention are used for a rider-assistance system of a two-wheeled motor vehicle. However, the controller and the control method according to the invention may be used for a rider-assistance system of a straddle-type vehicle other than the two-wheeled motor vehicle. The straddle-type vehicle means a vehicle that a rider drives while straddling a vehicle body thereof. Examples of the straddle-type vehicle are motorcycles (the two-wheeled motor vehicle and a three-wheeled motor vehicle) and a bicycle. The motorcycles include a vehicle having an engine as a power source, a vehicle having an electric motor as the power source, and the like. Examples of the motorcycles are a motorbike, a scooter, and an electric scooter. The bicycle means a vehicle capable of traveling forward on a road by a depression force applied to pedals by the rider. Examples of the bicycle are a normal bicycle, an electrically-assisted bicycle, and an electric bicycle.

The same or similar description will appropriately be simplified or will not be made below. In the drawings, the same or similar portions will be denoted by the same reference sign or will not be denoted by a reference sign. A detailed structure will appropriately be illustrated in a simplified manner or will not be illustrated.

### Embodiment

A description will hereinafter be made on a rider-assistance system according to an embodiment.

### <Configuration of Rider-Assistance System>

A description will be made on a configuration of the rider-assistance system according to the embodiment.

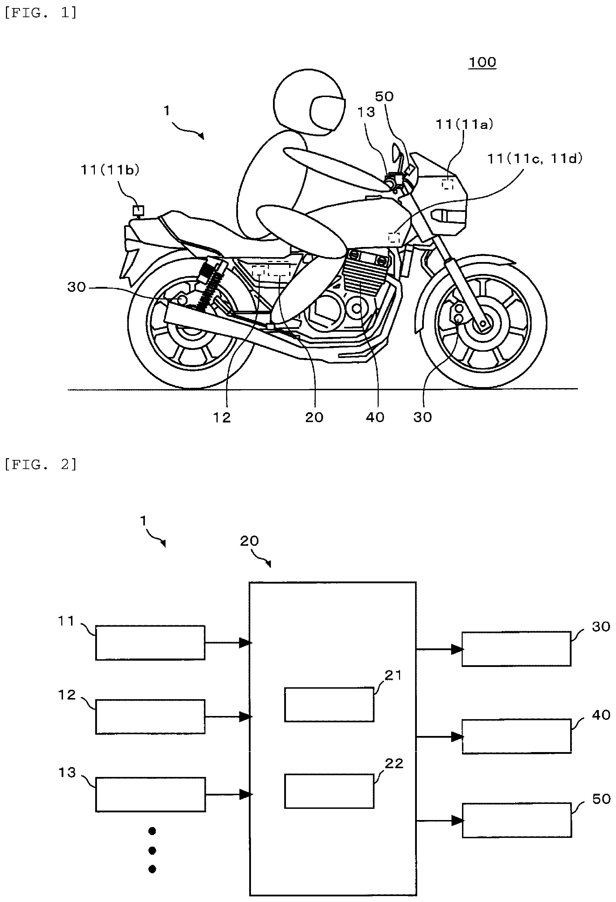

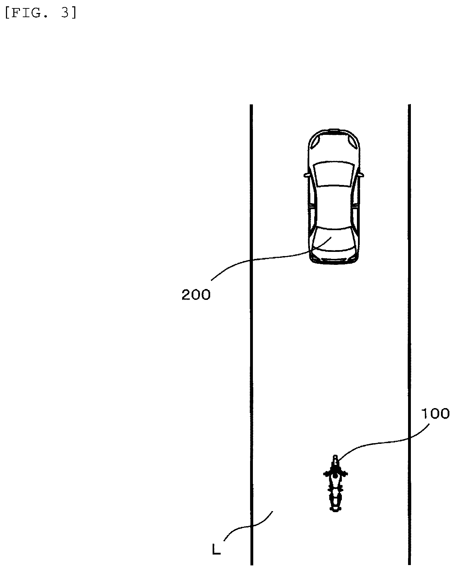

Fig. 1 is a view illustrating a mounted state of the rider-assistance system according to the embodiment of the invention to a straddle-type vehicle. Fig. 2 is a diagram illustrating a system configuration of the rider-assistance system according to the embodiment of the invention. Fig. 3 to Fig. 7 are views for explaining a configuration of the rider-assistance system according to the embodiment of the invention.

As illustrated in Fig. 1 and Fig. 2, a rider-assistance system 1 is mounted to a straddle-type vehicle (own vehicle) 100. For example, the rider-assistance system 1 includes a surrounding environment sensor 11, a vehicle behavior sensor 12, a setting input device 13, a controller (ECU) 20, a brake system 30, a drive system 40, and a notification device 50.

In the rider-assistance system 1, the controller 20 executes rider-assistance operation to assist a rider of the straddle-type vehicle 100 by using output of the surrounding environment sensor 11 and the vehicle behavior sensor 12 and output of the setting input device 13. The controller 20 executes the rider-assistance operation by outputting commands to the various devices (for example, the brake system 30, the drive system 40, the notification device 50, and the like). When necessary, the controller 20 receives output of various sensors (not illustrated) for detecting other types of information (for example, information on an operation state of the brake system 30 by the rider, information on an operation state of the drive system 40 by the rider, and the like). Each component of the rider-assistance system 1 may exclusively be used for the rider-assistance system 1 or may be shared with another system.

For example, the surrounding environment sensor 11 may be a surrounding environment sensor 11a that faces the front of the straddle-type vehicle 100, may be a surrounding environment sensor 11b that faces the rear of the straddle-type vehicle 100, may be a surrounding environment sensor 11c that faces the left of the straddle-type vehicle 100, may be a surrounding environment sensor 11d that faces the right of the straddle-type vehicle 100, or may be a combination of those. Examples of each of the surrounding environment sensors 11a, 11b, 11c, 11d are a radar, a Lidar sensor, an ultrasonic sensor, and a camera. At least a part of each of the surrounding environment sensor 11c and the surrounding environment sensor 11d may be substituted by the surrounding environment sensor 11a or the surrounding environment sensor 11b.

Examples of the vehicle behavior sensor 12 are a vehicle speed sensor and an inertial measurement unit (IMU). The vehicle speed sensor detects a speed generated to the straddle-type vehicle 100. The vehicle speed sensor may detect another physical quantity that can substantially be converted to a travel speed of the straddle-type vehicle 100. The IMU detects acceleration in three axes (a front-rear direction, a vehicle width direction, and a vehicle height direction) and angular velocities in three axes (roll, pitch, and yaw) generated to the straddle-type vehicle 100. The IMU may detect other physical quantities that can substantially be converted to the three-axis acceleration and the three-axis angular velocities generated to the straddle-type vehicle 100. Alternatively, the IMU may partially detect the three-axis acceleration and the three-axis angular velocities.

The setting input device 13 accepts input of various settings by the rider. For example, the rider can switch between validity and invalidity of each type of the rider-assistance operation by using the setting input device 13. In addition, for example, the rider can set various modes or various threshold values that are used for the various types of the rider-assistance operation by using the setting input device 13. The setting input device 13 may accept an operation by the rider's body (for example, a hand, a foot, or the like) or may accept voice produced by the rider. In addition, the setting input device 13 may be provided to the straddle-type vehicle 100 or may be provided to an accessory (for example, a helmet, a glove, or the like) that is associated with the straddle-type vehicle 100. Alternatively, the setting input device 13 may be integrated with the notification device 50.

The controller 20 at least includes an acquisition section 21 and an execution section 22. The sections of the controller 20 may collectively be provided in a single casing or may separately be provided in plural casings. In addition, the controller 20 as a whole or each of the sections of the controller 20 may be a microcomputer, a microprocessor unit, or the like, may be one whose firmware or the like can be updated, or may be a program module or the like that is executed by a command from a CPU or the like, for example.

When the rider-assistance operation is validated, the acquisition section 21 acquires surrounding environment information of a partial area in the surroundings of the straddle-type vehicle 100 on the basis of the output of at least one of the surrounding environment sensors 11. The surrounding environment information includes information on a target that is located in the partial area. In the case where the validated rider-assistance operation is intended to assist the rider with driving in response to an event that occurs in front of the straddle-type vehicle 100, a target (for example, a vehicle, an obstacle, a road facility, a person, an animal, or the like) that is located in front of the straddle-type vehicle 100 is determined as the target. In the case where the validated rider-assistance operation is intended to assist the rider with driving in response to an event that occurs behind the straddle-type vehicle 100, a target (for example, a vehicle, an obstacle, a road facility, a person, an animal, or the like) that is located behind the straddle-type vehicle 100 is determined as the target. In the case where the validated rider-assistance operation is intended to assist the rider with driving in response to an event that occurs on a side of the straddle-type vehicle 100, a target (for example, a vehicle, an obstacle, a road facility, a person, an animal, or the like) that is located on the side of the straddle-type vehicle 100 is determined as the target. The acquisition section 21 acquires positional relationship information between the straddle-type vehicle 100 and the target on the basis of the acquired surrounding environment information. Examples of the positional relationship information are information on a relative position, a relative distance, a relative speed, relative acceleration, relative jerk, a passing time difference, a predicted time until a collision, and presence or absence within a specified distance range. The positional relationship information may be information on another physical quantity that can substantially be converted to one of those.

The surrounding environment information (in particular, the positional relationship information between the straddle-type vehicle 100 and the target) can also be detected by a surrounding environment sensor that is mounted to another vehicle or by an infrastructure facility. That is, the acquisition section 21 may acquire the surrounding environment information (in particular, the positional relationship information between the straddle-type vehicle 100 and the target) via wireless communication with the other vehicle or the infrastructure facility.

In a normal state (that is, a state where it is determined that a group travel mode, which will be described below, is not valid), the execution section 22 executes first operation as the rider-assistance operation on the basis of the positional relationship information between the straddle-type vehicle 100 and the target. For example, the first operation is the rider-assistance operation that is not specialized in group travel.

For example, as illustrated in Fig. 3, as the first operation, the execution section 22 executes positional relationship adjustment operation to automatically change the travel speed of the straddle-type vehicle 100 on the basis of positional relationship information between the straddle-type vehicle 100 and another vehicle 200, which is acquired by the acquisition section 21, and to thereby adjust a positional relationship between the straddle-type vehicle 100 and the other vehicle 200. The positional relationship adjustment operation is the rider-assistance operation to adjust the positional relationship in a length direction of a lane L. When executing the positional relationship adjustment operation, the execution section 22 automatically changes the travel speed of the straddle-type vehicle 100 by outputting the command to the brake system 30 or the drive system 40. The brake system 30 brakes the straddle-type vehicle 100. The drive system 40 as a power source of the straddle-type vehicle 100 drives the straddle-type vehicle 100. The brake system 30 may be controlled to generate or increase deceleration of the straddle-type vehicle 100 or may be controlled to generate or increase acceleration of the straddle-type vehicle 100. The drive system 40 may be controlled to generate or increase the acceleration of the straddle-type vehicle 100 or may be controlled to generate or increase the deceleration of the straddle-type vehicle 100. The positional relationship adjustment operation may be operation to automatically generate the deceleration or the acceleration to the straddle-type vehicle 100 without relying on the rider's operation of the brake system 30 or the drive system 40, so as to adjust the positional relationship between the straddle-type vehicle 100 and the other vehicle 200 (for example, adaptive cruise control operation with the other vehicle 200 as a speed following target, operation to decelerate or accelerate the straddle-type vehicle 100 in order to avoid or mitigate a collision against the other vehicle 200, operation to actuate the brake system 30 in order to control the positional relationship with the other vehicle 200 to the positional relationship corresponding to an operation amount of the drive system 40 in a state where the rider operates the drive system 40, operation to actuate the drive system 40 in order to control the positional relationship with the other vehicle 200 to the positional relationship corresponding to an operation amount of the brake system 30 in a state where the rider operates the brake system 30, or the like). Alternatively, the positional relationship adjustment operation may be operation to automatically increase or reduce a braking force generated to the straddle-type vehicle 100 in order to correct excess or deficiency of the rider's operation of the brake system 30 and thereby adjust the positional relationship between the straddle-type vehicle 100 and the other vehicle 200. Further alternatively, the positional relationship adjustment operation may be operation to automatically increase or reduce drive power generated to the straddle-type vehicle 100 in order to correct excess or deficiency of the rider's operation of the drive system 40 and thereby adjust the positional relationship between the straddle-type vehicle 100 and the other vehicle 200.

When executing the positional relationship adjustment operation, the execution section 22 executes notification operation for the rider or a driver of the other vehicle 200 by outputting the command to the notification device 50 as necessary (for example, according to need to notify of the inappropriate positional relationship). The notification device 50 may notify the rider by display (that is, a sensation through a visual organ as a sensory organ), may notify the rider by sound (that is, a sensation through an auditory organ as the sensory organ), or may notify the rider by vibrations (that is, a sensation through a tactile organ as the sensory organ). Examples of the notification device 50 is a display, a lamp, a speaker, and a vibrator. The notification device 50 may be provided to the straddle-type vehicle 100 or the other vehicle 200, or may be provided to the accessory (for example, the helmet, the glove, or the like) that is associated with the straddle-type vehicle 100 or the other vehicle 200.

In the rider-assistance operation that is executed by the execution section 22, the positional relationship adjustment operation may not be executed, and only the notification operation may be executed. In the notification operation, the execution section 22 preferably outputs the command to the notification device 50 and causes the notification device 50 to notify the rider or the driver of the other vehicle 200 of quality of the positional relationship between the straddle-type vehicle 100 and the other vehicle 200. Fig. 3 illustrates a case where the other vehicle 200 is a vehicle that travels in front of the straddle-type vehicle 100. However, the other vehicle 200 may be a vehicle that travels behind or on the side of the straddle-type vehicle 100. In addition, the other vehicle 200 may be another target (for example, the obstacle, the road facility, the person, the animal, or the like).

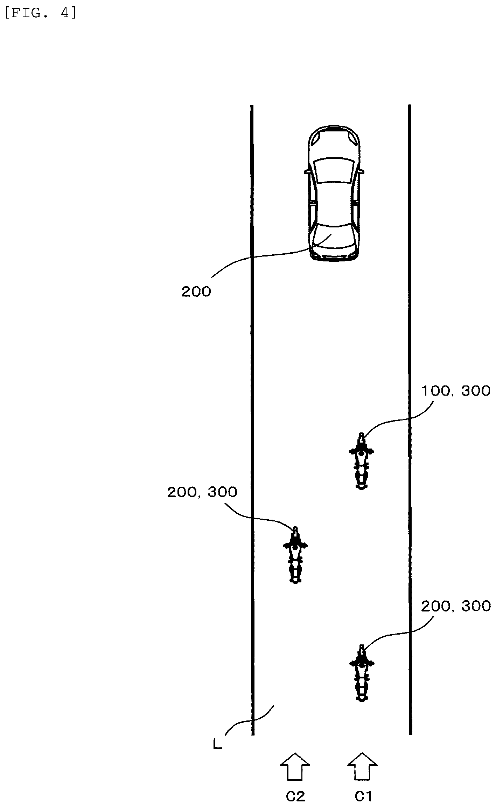

Here, in the case where a group travel mode as a mode in which a group formed of plural straddle-type vehicles 300, including the straddle-type vehicle 100, travels in plural vehicle lines in a single lane is determined to be valid, the acquisition section 21 acquires positional information of the straddle-type vehicle 100 in the group. The determination on whether the group travel mode is valid is made when the rider-assistance operation is validated and/or while the rider-assistance operation is executed. As illustrated in Fig. 4 to Fig. 7, the group travel mode is a mode in which the plural straddle-type vehicles 300 including the straddle-type vehicle 100 travel as a group, that is, in a team in plural vehicle lines C1, C2 in the single lane L. The number of the straddle-type vehicles 300 that belong to each of the vehicle lines C1, C2 may be plural or one. In the case where it is determined that the group travel mode is valid, the execution section 22 executes the rider-assistance operation on the basis of the positional information of the straddle-type vehicle 100 in the group, which is acquired by the acquisition section 21.

For example, the validity and the invalidity of the group travel mode are switched by the rider's setting input. The acquisition section 21 acquires information on such a setting as setting input information on the basis of the output of the setting input device 13. It is determined whether the group travel mode is valid on the basis of the setting input information. Validation and/or invalidation of the group travel mode may automatically be proposed to the rider on the basis of the surrounding environment information acquired by the acquisition section 21, and such a proposal may be confirmed by the rider's setting input of acceptance.

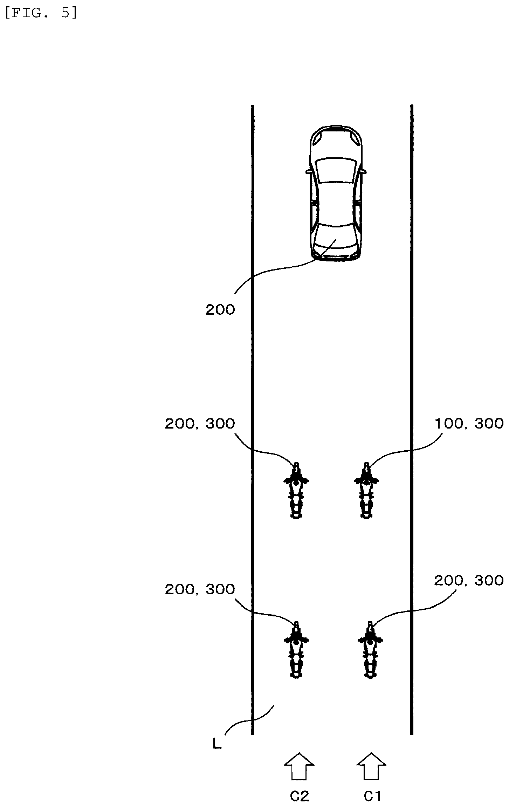

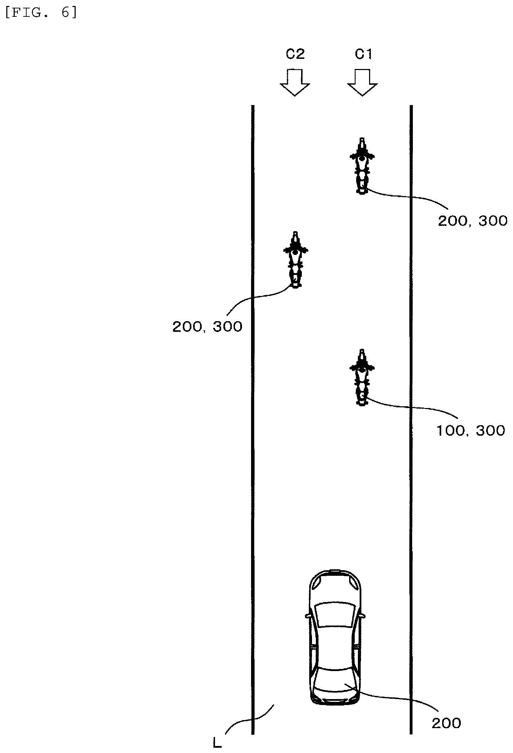

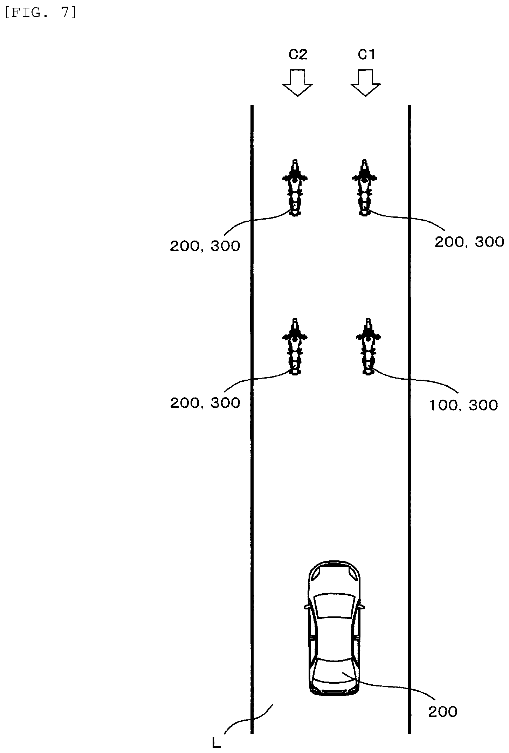

For example, the validity and the invalidity of the group travel mode are automatically switched on the basis of the output of at least one of the surrounding environment sensors 11. It is determined whether the group travel mode is valid on the basis of information on the switching. The surrounding environment information, which is acquired by the acquisition section 21, is processed. Then, it is determined whether travel of the straddle-type vehicle 100 and the other straddle-type vehicles 300, which are located around the straddle-type vehicle 100, in a particular aspect (for example, an aspect as illustrated in Fig. 4 and Fig. 6 in which the two vehicle lines C1, C2 are formed such that the straddle-type vehicle 100 and the plural other straddle-type vehicles 300 travel in a zig-zag manner, an aspect as illustrated in Fig. 5 and Fig. 7 in which the two vehicle lines C1, C2 are formed such that the straddle-type vehicle 100 and the plural other straddle-type vehicles 300 travel side by side, an aspect in which the straddle-type vehicle 100 and one other straddle-type vehicle 300 travel diagonally, or the like) continues over a reference time or a reference travel distance. If the determination is positive, the group travel mode is automatically validated. The other vehicle 200 located in the lane L, in which the straddle-type vehicle 100 travels, may be identified, and only the identified other vehicle 200 may be set as the determination target. Alternatively, without using information on a boundary of the lane L, the other vehicle 200 that continues to be located within a specified distance range of the straddle-type vehicle 100 over a reference time or a reference travel distance may be identified, and the identified other vehicle 200 may be set as the determination target.

The positional information of the straddle-type vehicle 100 in the group, which is acquired by the acquisition section 21, includes, as necessary: foremost corresponding information as information on whether the straddle-type vehicle 100 is a foremost vehicle in the group; last corresponding information as information on whether the straddle-type vehicle 100 is a last vehicle in the group; and intermediate corresponding information as information on whether the straddle-type vehicle 100 is an intermediate vehicle in the group, that is, a vehicle traveling between the foremost vehicle and the last vehicle. Here, in the case where travel road information that is information on a shape of a road traveled by the straddle-type vehicle 100 is information indicating a curved road, preferably, the acquisition section 21 does not acquire the positional information of the straddle-type vehicle 100 in the group. That is, in the case where the travel road information acquired by the acquisition section 21 is the information indicating the curved road, the execution section 22 preferably executes the rider-assistance operation not on the basis of the positional information of the straddle-type vehicle 100 in the group that is acquired at the time point. The acquisition section 21 may acquire the travel road information on the basis of the output of the vehicle behavior sensor 12 (for example, information on the roll or yaw angular velocity generated to the straddle-type vehicle 100, information on steering of the straddle-type vehicle 100, or the like), may acquire the travel road information on the basis of the surrounding environment information, or may acquire the travel road information on the basis of map information provided from the Global Positioning System.

The acquisition section 21 acquires the foremost corresponding information on the basis of the surrounding environment information in front of the straddle-type vehicle 100. Here, in a state where the positional relationship between the straddle-type vehicle 100 and the other vehicle 200 traveling in front of the straddle-type vehicle 100 is unstable (for example, a state where a relative speed between the straddle-type vehicle 100 and the other vehicle 200 traveling in front of the straddle-type vehicle 100 exceeds a reference), preferably, the acquisition section 21 does not acquire the foremost corresponding information. That is, in the case where the positional relationship between the straddle-type vehicle 100 and the other vehicle 200 traveling in front of the straddle-type vehicle 100 is not stable, the execution section 22 preferably executes the rider-assistance operation not on the basis of the positional information of the straddle-type vehicle 100 in the group acquired at the time point, that is, the foremost corresponding information.

The acquisition section 21 may acquire the foremost corresponding information on the basis of information on presence or absence of the other vehicle 200 traveling in front of the straddle-type vehicle 100, may acquire the foremost corresponding information on the basis of the positional relationship information between the straddle-type vehicle 100 and the other vehicle 200 traveling in front of the straddle-type vehicle 100, may acquire the foremost corresponding information on the basis of model information of the other vehicle 200 traveling in front of the straddle-type vehicle 100, or may acquire the foremost corresponding information on the basis of a combination of those. The other vehicle 200 is preferably the other vehicle 200 that travels closest to the straddle-type vehicle 100 of the plural other vehicles 200 located in front (directly in front and/or diagonally in front) of the straddle-type vehicle 100.

For example, in examples illustrated in Fig. 4 and Fig. 5, in the case where the other vehicle 200 traveling in front (directly in front or diagonally in front) of the straddle-type vehicle 100 is not detected for a reference time or longer in the valid state of the group travel mode, the acquisition section 21 acquires, as the foremost corresponding information, the information indicating that the straddle-type vehicle 100 is the foremost vehicle in the group, and outputs the information to the execution section 22. In the examples illustrated in Fig. 4 and Fig. 5, in the case where a state where a relative distance or a passing time difference between the straddle-type vehicle 100 and the other vehicle 200 traveling in front (diagonally in front) of the straddle-type vehicle 100 in the length direction of the lane L is longer than a reference continues for a reference time or longer in the valid state of the group travel mode, the acquisition section 21 acquires, as the foremost corresponding information, the information indicating that the straddle-type vehicle 100 is the foremost vehicle in the group, and outputs the information to the execution section 22. In the examples illustrated in Fig. 4 and Fig. 5, in the case where a model of the other vehicle 200 traveling in front (diagonally in front) of the straddle-type vehicle 100 is not the straddle-type vehicle in the valid state of the group travel mode, the acquisition section 21 acquires, as the foremost corresponding information, the information indicating that the straddle-type vehicle 100 is the foremost vehicle in the group, and outputs the information to the execution section 22. In the examples illustrated in Fig. 4 and Fig. 5, in the case where a state where a relative distance between the straddle-type vehicle 100 and the other vehicle 200 traveling in front (diagonally in front) of the straddle-type vehicle 100 in a width direction of the lane L (in particular, a relative distance between centers of vehicle body widths) is shorter than a reference continues for a reference time or longer in the valid state of the group travel mode, the acquisition section 21 acquires, as the foremost corresponding information, the information indicating that the straddle-type vehicle 100 is the foremost vehicle in the group, and outputs the information to the execution section 22.

The acquisition section 21 may acquire the foremost corresponding information on the basis of the surrounding environment information behind and/or on the side of the straddle-type vehicle 100 in addition to the surrounding environment information in front of the straddle-type vehicle 100. Here, in a state where the positional relationship between the straddle-type vehicle 100 and the other vehicle 200 traveling behind and/or on the side of the straddle-type vehicle 100 is not stable (for example, a state where a relative speed between the straddle-type vehicle 100 and the other vehicle 200 traveling behind and/or on the side of the straddle-type vehicle 100 exceeds a reference), preferably, the acquisition section 21 does not acquire the foremost corresponding information. That is, in the case where the positional relationship between the straddle-type vehicle 100 and the other vehicle 200 traveling behind and/or on the side of the straddle-type vehicle 100 is not stable, the execution section 22 preferably executes the rider-assistance operation not on the basis of the positional information of the straddle-type vehicle 100 in the group acquired at the time point, that is, the foremost corresponding information.

For example, in the examples illustrated in Fig. 4 and Fig. 5, in the case where the model of the other vehicle 200 traveling behind (directly behind and/or diagonally behind) and/or on the side of the straddle-type vehicle 100 is the straddle-type vehicle in the state where the group travel mode is valid and the surrounding environment information in front of the straddle-type vehicle 100 satisfies the above-described condition, the acquisition section 21 acquires, as the foremost corresponding information, the information indicating that the straddle-type vehicle 100 is the foremost vehicle in the group, and outputs the information to the execution section 22. In the examples illustrated in Fig. 4 and Fig. 5, in the case where a state where the relative distance between the straddle-type vehicle 100 and the other vehicle 200 traveling behind (diagonally behind) and/or on the side of the straddle-type vehicle 100 in the width direction of the lane L (in particular, the relative distance between the centers of the vehicle body widths) is longer than the reference continues for the reference time or longer in the state where the group travel mode is valid and the surrounding environment information in front of the straddle-type vehicle 100 satisfies the above-described condition, the acquisition section 21 acquires, as the foremost corresponding information, the information indicating that the straddle-type vehicle 100 is the foremost vehicle in the group, and outputs the information to the execution section 22. In the examples illustrated in Fig. 4 and Fig. 5, in the case where a state where the relative distance between the straddle-type vehicle 100 and the other vehicle 200 traveling behind (directly behind) the straddle-type vehicle 100 in the width direction of the lane L (in particular, the relative distance between the centers of the vehicle body widths) is shorter than the reference continues for the reference time or longer in the state where the group travel mode is valid and the surrounding environment information in front of the straddle-type vehicle 100 satisfies the above-described condition, the acquisition section 21 acquires, as the foremost corresponding information, the information indicating that the straddle-type vehicle 100 is the foremost vehicle in the group, and outputs the information to the execution section 22. In the examples illustrated in Fig. 4 and Fig. 5, in the case where a state where the relative distance or the passing time difference between the straddle-type vehicle 100 and the other vehicle 200 traveling behind (directly behind and/or diagonally behind) and/or on the side of the straddle-type vehicle 100 in the length direction of the lane L is shorter than the reference continues for the reference time or longer in the state where the group travel mode is valid and the surrounding environment information in front of the straddle-type vehicle 100 satisfies the above-described condition, the acquisition section 21 acquires, as the foremost corresponding information, the information indicating that the straddle-type vehicle 100 is the foremost vehicle in the group, and outputs the information to the execution section 22. The other vehicle 200 is preferably the other vehicle 200 that travels closest to the straddle-type vehicle 100 of the plural other vehicles 200 located behind (directly behind and/or diagonally behind) and/or on the side of the straddle-type vehicle 100.

The acquisition section 21 acquires the last corresponding information on the basis of the surrounding environment information behind the straddle-type vehicle 100. Here, in a state where the positional relationship between the straddle-type vehicle 100 and the other vehicle 200 traveling behind the straddle-type vehicle 100 is not stable (for example, a state where a relative speed between the straddle-type vehicle 100 and the other vehicle 200 traveling behind the straddle-type vehicle 100 exceeds a reference), preferably, the acquisition section 21 does not acquire the last corresponding information. That is, in the case where the positional relationship between the straddle-type vehicle 100 and the other vehicle 200 traveling behind the straddle-type vehicle 100 is not stable, the execution section 22 preferably executes the rider-assistance operation not on the basis of the positional information of the straddle-type vehicle 100 in the group acquired at the time point, that is, the last corresponding information.

The acquisition section 21 may acquire the last corresponding information on the basis of information on presence or absence of the other vehicle 200 traveling behind the straddle-type vehicle 100, may acquire the last corresponding information on the basis of the positional relationship information between the straddle-type vehicle 100 and the other vehicle 200 traveling behind the straddle-type vehicle 100, may acquire the last corresponding information on the basis of the model information of the other vehicle 200 traveling behind the straddle-type vehicle 100, or may acquire the last corresponding information on the basis of a combination of those. The other vehicle 200 is preferably the other vehicle 200 that travels closest to the straddle-type vehicle 100 of the plural other vehicles 200 located behind (directly behind and/or diagonally behind) the straddle-type vehicle 100.

For example, in examples illustrated in Fig. 6 and Fig. 7, in the case where the other vehicle 200 traveling behind (directly behind or diagonally behind) the straddle-type vehicle 100 is not detected for a reference time or longer in the valid state of the group travel mode, the acquisition section 21 acquires, as the last corresponding information, the information indicating that the straddle-type vehicle 100 is the last vehicle in the group, and outputs the information to the execution section 22. In the examples illustrated in Fig. 6 and Fig. 7, in the case where the state where the relative distance or the passing time difference between the straddle-type vehicle 100 and the other vehicle 200 traveling behind (diagonally behind) the straddle-type vehicle 100 in the length direction of the lane L is longer than the reference continues for the reference time or longer in the valid state of the group travel mode, the acquisition section 21 acquires, as the last corresponding information, the information indicating that the straddle-type vehicle 100 is the last vehicle in the group, and outputs the information to the execution section 22. In the examples illustrated in Fig. 6 and Fig. 7, in the case where the model of the other vehicle 200 traveling behind (diagonally behind) the straddle-type vehicle 100 is not the straddle-type vehicle in the valid state of the group travel mode, the acquisition section 21 acquires, as the last corresponding information, the information indicating that the straddle-type vehicle 100 is the last vehicle in the group, and outputs the information to the execution section 22. In the examples illustrated in Fig. 6 and Fig. 7, in the case where the state where the relative distance between the straddle-type vehicle 100 and the other vehicle 200 traveling behind (diagonally behind) the straddle-type vehicle 100 in the width direction of the lane L (in particular, the relative distance between the centers of the vehicle body widths) is shorter than the reference continues for the reference time or longer in the valid state of the group travel mode, the acquisition section 21 acquires, as the last corresponding information, the information indicating that the straddle-type vehicle 100 is the last vehicle in the group, and outputs the information to the execution section 22.

The acquisition section 21 may acquire the last corresponding information on the basis of the surrounding environment information in front of and/or on the side of the straddle-type vehicle 100 in addition to the surrounding environment information behind the straddle-type vehicle 100. Here, in the state where the positional relationship between the straddle-type vehicle 100 and the other vehicle 200 traveling in front and/or on the side of the straddle-type vehicle 100 is not stable (for example, the state where the relative speed between the straddle-type vehicle 100 and the other vehicle 200 traveling in front and/or on the side of the straddle-type vehicle 100 exceeds the reference), preferably, the acquisition section 21 does not acquire the last corresponding information. That is, in the case where the positional relationship between the straddle-type vehicle 100 and the other vehicle 200 traveling in front and/or on the side of the straddle-type vehicle 100 is not stable, the execution section 22 preferably executes the rider-assistance operation not on the basis of the positional information of the straddle-type vehicle 100 in the group acquired at the time point, that is, the last corresponding information.

For example, in the examples illustrated in Fig. 6 and Fig. 7, in the case where the model of the other vehicle 200 traveling in front (directly in front and/or diagonally in front) and/or on the side of the straddle-type vehicle 100 is the straddle-type vehicle in the state where the group travel mode is valid and the surrounding environment information behind the straddle-type vehicle 100 satisfies the above-described condition, the acquisition section 21 acquires, as the last corresponding information, the information indicating that the straddle-type vehicle 100 is the last vehicle in the group, and outputs the information to the execution section **22.** In the examples illustrated in Fig. 6 and Fig. 7, in the case where the state where the relative distance between the straddle-type vehicle 100 and the other vehicle 200 traveling in front (diagonally in front) and/or on the side of the straddle-type vehicle 100 in the width direction of the lane L (in particular, the relative distance between the centers of the vehicle body widths) is longer than the reference continues for the reference time or longer in the state where the group travel mode is valid and the surrounding environment information behind the straddle-type vehicle 100 satisfies the above-described condition, the acquisition section 21 acquires, as the last corresponding information, the information indicating that the straddle-type vehicle 100 is the last vehicle in the group, and outputs the information to the execution section 22. In the examples illustrated in Fig. 6 and Fig. 7, in the case where the state where the relative distance between the straddle-type vehicle 100 and the other vehicle 200 traveling in front (directly in front) of the straddle-type vehicle 100 in the width direction of the lane L (in particular, the relative distance between the centers of the vehicle body widths) is shorter than the reference continues for the reference time or longer in the state where the group travel mode is valid and the surrounding environment information behind the straddle-type vehicle 100 satisfies the above-described condition, the acquisition section 21 acquires, as the last corresponding information, the information indicating that the straddle-type vehicle 100 is the last vehicle in the group, and outputs the information to the execution section 22. In the examples illustrated in Fig. 6 and Fig. 7, in the case where a state where the relative distance or the passing time difference between the straddle-type vehicle 100 and the other vehicle 200 traveling in front (directly in front and/or diagonally in front) and/or on the side of the straddle-type vehicle 100 in the length direction of the lane L is shorter than the reference continues for the reference time or longer in the state where the group travel mode is valid and the surrounding environment information behind the straddle-type vehicle 100 satisfies the above-described condition, the acquisition section 21 acquires, as the last corresponding information, the information indicating that the straddle-type vehicle 100 is the last vehicle in the group, and outputs the information to the execution section 22. The other vehicle 200 is preferably the other vehicle 200 that travels closest to the straddle-type vehicle 100 of the plural other vehicles 200 located in front (directly in front or diagonally in front) and/or on the side of the straddle-type vehicle 100.

The acquisition section 21 acquires the intermediate corresponding information on the basis of the foremost corresponding information and the last corresponding information. For example, in the case where the foremost corresponding information is information indicating that the straddle-type vehicle 100 is not the foremost vehicle in the group and where the last corresponding information is information indicating that the straddle-type vehicle 100 is not the last vehicle in the group, the acquisition section 21 acquires, as the intermediate corresponding information, information indicating that the straddle-type vehicle 100 is the intermediate vehicle in the group, and outputs the information to the execution section 22.

The acquisition section 21 may acquire the intermediate corresponding information on the basis of the surrounding environment information in front of and behind the straddle-type vehicle 100. Here, in the state where the positional relationship between the straddle-type vehicle 100 and the other vehicle 200 traveling in front of the straddle-type vehicle 100 and/or the positional relationship between the straddle-type vehicle 100 and the other vehicle 200 traveling behind the straddle-type vehicle 100 is not stable (for example, the state where the relative speed between the straddle-type vehicle 100 and the other vehicle 200 traveling in front of the straddle-type vehicle 100 and/or the relative speed between the straddle-type vehicle 100 and the other vehicle 200 traveling behind the straddle-type vehicle 100 exceeds the reference), preferably, the acquisition section 21 does not acquire the intermediate corresponding information. That is, in the case where the positional relationship between the straddle-type vehicle 100 and the other vehicle 200 traveling in front of the straddle-type vehicle 100 and/or the positional relationship between the straddle-type vehicle 100 and the other vehicle 200 traveling behind the straddle-type vehicle 100 is not stable, the execution section 22 preferably executes the rider-assistance operation not on the basis of the positional information of the straddle-type vehicle 100 in the group acquired at the time point, that is, the intermediate corresponding information.

For example, in the case where the models of the other vehicle 200 traveling in front (diagonally in front and/or directly in front) of the straddle-type vehicle 100 and the other vehicle 200 traveling behind (diagonally behind and/or directly behind) the straddle-type vehicle 100 are the straddle-type vehicles in the valid state of the group travel mode, the acquisition section 21 acquires, as the intermediate corresponding information, the information indicating that the straddle-type vehicle 100 is the intermediate vehicle in the group, and outputs the information to the execution section 22. In the case where the state where the relative distance between the straddle-type vehicle 100 and the other vehicle 200 traveling in front (diagonally in front) of the straddle-type vehicle 100 in the width direction of the lane L (in particular, the relative distance between the centers of the vehicle body widths) is longer than the reference and the relative distance between the straddle-type vehicle 100 and the other vehicle 200 traveling behind (diagonally behind) the straddle-type vehicle 100 in the width direction of the lane L (in particular, the relative distance between the centers of the vehicle body widths) is longer than the reference continues for the reference time or longer in the valid state of the group travel mode, the acquisition section 21 acquires, as the intermediate corresponding information, the information indicating that the straddle-type vehicle 100 is the intermediate vehicle in the group, and outputs the information to the execution section 22. In the case where the state where the relative distance between the straddle-type vehicle 100 and the other vehicle 200 traveling in front (directly in front) of the straddle-type vehicle 100 in the width direction of the lane L (in particular, the relative distance between the centers of the vehicle body widths) is shorter than the reference and the relative distance between the straddle-type vehicle 100 and the other vehicle 200 traveling behind (directly behind) the straddle-type vehicle 100 in the width direction of the lane L (in particular, the relative distance between the centers of the vehicle body widths) is shorter than the reference continues for the reference time or longer in the valid state of the group travel mode, the acquisition section 21 acquires, as the intermediate corresponding information, the information indicating that the straddle-type vehicle 100 is the intermediate vehicle in the group, and outputs the information to the execution section 22. In the case where the state where the relative distance or the passing time difference between the straddle-type vehicle 100 and the other vehicle 200 traveling in front (diagonally in front and/or directly in front) of the straddle-type vehicle 100 in the length direction of the lane L is shorter than the reference and the relative distance or the passing time difference between the straddle-type vehicle 100 and the other vehicle 200 traveling behind (diagonally behind and/or directly behind) the straddle-type vehicle 100 in the length direction of the lane L is shorter than the reference continues for the reference time or longer in the valid state of the group travel mode, the acquisition section 21 acquires, as the intermediate corresponding information, the information indicating that the straddle-type vehicle 100 is the intermediate vehicle in the group, and outputs the information to the execution section 22. The other vehicle 200 is preferably the other vehicle 200 that travels closest to the straddle-type vehicle 100 of the plural other vehicles 200 located in front (directly in front and/or diagonally in front) of or behind (directly behind and/or diagonally behind) the straddle-type vehicle 100.

In the case where it is determined that the group travel mode is valid, the execution section 22 executes the rider-assistance operation on the basis of the positional information of the straddle-type vehicle 100 in the group, which is acquired by the acquisition section 21. The execution section 22 may present the positional information of the straddle-type vehicle 100 in the group, which is acquired by the acquisition section 21, to the rider by using the notification device 50 and reflect the positional information to the rider-assistance operation after the positional information is approved by the rider's input using the setting input device 13, or reflect the positional information to the rider-assistance operation without interposing the presentation to and the approval by the rider.

In the case where the intermediate corresponding information acquired by the acquisition section 21 is the information indicating that the straddle-type vehicle 100 is the intermediate vehicle in the group in the valid state of the group travel mode, second operation is executed. The second operation is the different rider-assistance operation from the rider-assistance operation that is executed when it is determined that the group travel mode is not valid (that is, the first operation). For example, the second operation is the rider-assistance operation that is specialized in the group travel.

As an example, a description will be made on a case where the validated rider-assistance operation is intended to assist the rider with driving in response to the event that occurs in front of the straddle-type vehicle 100 and the execution section 22 executes, as the first operation and the second operation, the positional relationship adjustment operation to adjust the positional relationship with the other vehicle 200 traveling in front of the straddle-type vehicle 100. The positional relationship adjustment operation is the operation to adjust the positional relationship in the length direction of the lane L. Here, the same method is also applied to a case where the validated rider-assistance operation is intended to assist the rider with driving in response to the event that occurs behind the straddle-type vehicle 100 and the execution section 22 executes, as the first operation and the second operation, the positional relationship adjustment operation to adjust the positional relationship with the other vehicle 200 that travels behind the straddle-type vehicle 100. The same method is also applied to the positional relationship adjustment operation for the target other than the other vehicle 200. In addition, in the rider-assistance operation, the execution section 22 may execute the notification operation in addition to the positional relationship adjustment operation, or may only execute the notification operation without executing the positional relationship adjustment operation.

The execution section 22 changes an area as the target, the surrounding environment information of which is acquired, between the first operation and the second operation. For example, in the first operation, the execution section 22 acquires the surrounding environment information only of the area located directly in front of the straddle-type vehicle 100. In the second operation, the execution section 22 acquires the surrounding environment information of the area located diagonally in front and/or on the side of the straddle-type vehicle 100 in addition to the area located directly in front of the straddle-type vehicle 100.

The execution section 22 changes an area where the other vehicle 200 as an adjustment target of the positional relationship is searched for and/or an area where the other vehicle 200 as a determination target of inappropriateness of the positional relationship is searched for between the first operation and the second operation. For example, in the first operation, the execution section 22 adjusts and/or determines the inappropriateness of the positional relationship between the straddle-type vehicle 100 and the other vehicle 200 located directly in front of the straddle-type vehicle 100. In the second operation, the execution section 22 adjusts and/or determines the inappropriateness of the positional relationship between the straddle-type vehicle 100 and the other vehicle 200 located directly in front, diagonally in front, and/or on the side of the straddle-type vehicle 100.

The execution section 22 changes a target value of the adjustment of the positional relationship (for example, the relative distance, the passing time difference, or the like) and/or a threshold value for the determination of the inappropriateness of the positional relationship (for example, a threshold value of a predicted time until the collision, or the like) between the first operation and the second operation. For example, in the first operation, the execution section 22 increases the target value (for example, the relative distance, the passing time difference, or the like) of the adjustment of the positional relationship between the straddle-type vehicle 100 and the other vehicle 200 traveling in front of the straddle-type vehicle 100. In the second operation, the execution section 22 reduces the target value (for example, the relative distance, the passing time difference, or the like) of the adjustment of the positional relationship between the straddle-type vehicle 100 and the other vehicle 200 traveling in front of the straddle-type vehicle 100. Alternatively, in the first operation, the execution section 22 increases the threshold value for the determination of the inappropriateness of the positional relationship (for example, the threshold value of the predicted time until the collision, or the like) between the straddle-type vehicle 100 and the other vehicle 200 traveling in front of the straddle-type vehicle 100. In the second operation, the execution section 22 reduces the threshold value for the determination of the inappropriateness of the positional relationship (for example, the threshold value of the predicted time until the collision, or the like) between the straddle-type vehicle 100 and the other vehicle 200 traveling in front of the straddle-type vehicle 100.

The execution section 22 changes a limit value of a speed change (for example, the acceleration, the jerk, or the like) that is generated to the straddle-type vehicle 100 in the positional relationship adjustment operation between the first operation and the second operation. For example, in the first operation, the execution section 22 increases the limit value of the speed change (for example, the acceleration, the jerk, or the like) that is generated to the straddle-type vehicle 100 in the positional relationship adjustment operation. In the second operation, the execution section 22 reduces the limit value of the speed change (for example, the acceleration, the jerk, or the like) that is generated to the straddle-type vehicle 100 in the positional relationship adjustment operation.

In the following case, the execution section 22 executes the first operation in response to the event that occurs in front of and/or behind the straddle-type vehicle 100, that is, the rider-assistance operation that is executed when it is determined that the group travel mode is not valid. The case is where the validated rider-assistance operation is intended to assist the rider with driving in response to the event that occurs in front of and/or behind the straddle-type vehicle 100, the acquisition section 21 acquires the foremost corresponding information and the last corresponding information, in the valid state of the group travel mode, the foremost corresponding information acquired by the acquisition section 21 is the information indicating that the straddle-type vehicle 100 is the foremost vehicle in the group, and the last corresponding information acquired by the acquisition section 21 is the information indicating that the straddle-type vehicle 100 is the last vehicle in the group.

In the following case, the execution section 22 executes the first operation in response to the event that occurs in front of the straddle-type vehicle 100, that is, the rider-assistance operation that is executed when it is determined that the group travel mode is not valid. The case is where the validated rider-assistance operation is intended to assist the rider with driving in response to the event that only occurs in front of the straddle-type vehicle 100, the acquisition section 21 only acquires the foremost corresponding information, and, in the valid state of the group travel mode, the foremost corresponding information acquired by the acquisition section 21 is the information indicating that the straddle-type vehicle 100 is the foremost vehicle in the group. In the case where the validated rider-assistance operation is intended to assist the rider with driving in response to the events that occur in front of and behind the straddle-type vehicle 100, the execution section 22 executes the first operation in response to the event that occurs in front of the straddle-type vehicle 100, and executes the second operation in response to the event that occurs behind the straddle-type vehicle 100. Here, the execution section 22 may execute the second operation (for example, the rider-assistance operation in which the area shifted to the left from the area in the first operation is an acquisition target of the surrounding environment information in a state where the vehicle line C1, to which the straddle-type vehicle 100 belongs, is located to the right in the lane L, the rider-assistance operation in which the area shifted to the right from the area in the first operation is the acquisition target of the surrounding environment information in a state where the vehicle line C1, to which the straddle-type vehicle 100 belongs, is located to the left in the lane L, or the like) in response to the event that occurs in front of the straddle-type vehicle 100.

In the following case, the execution section 22 executes the first operation in response to the event that occurs in front of the straddle-type vehicle 100, that is, the rider-assistance operation that is executed when it is determined that the group travel mode is not valid. The case is where the validated rider-assistance operation is intended to assist the rider with driving in response to the event that only occurs in front of the straddle-type vehicle 100, the acquisition section 21 acquires the foremost corresponding information and the last corresponding information, in the valid state of the group travel mode, the foremost corresponding information acquired by the acquisition section 21 is the information indicating that the straddle-type vehicle 100 is the foremost vehicle in the group, and the last corresponding information acquired by the acquisition section 21 is the information indicating that the straddle-type vehicle 100 is not the last vehicle in the group. In the case where the validated rider-assistance operation is intended to assist the rider with driving in response to the events that occur in front of and behind the straddle-type vehicle 100, the execution section 22 executes the first operation in response to the event that occurs in front of the straddle-type vehicle 100, and executes the second operation in response to the event that occurs behind the straddle-type vehicle 100. Here, the execution section 22 may execute the second operation (for example, the rider-assistance operation in which the area shifted to the left from the area in the first operation is the acquisition target of the surrounding environment information in the state where the vehicle line C1, to which the straddle-type vehicle 100 belongs, is located to the right in the lane L, the rider-assistance operation in which the area shifted to the right from the area in the first operation is the acquisition target of the surrounding environment information in the state where the vehicle line C1, to which the straddle-type vehicle 100 belongs, is located to the left in the lane L, or the like) in response to the event that occurs in front of the straddle-type vehicle 100.

In the following case, the execution section 22 executes the first operation in response to the event that occurs behind the straddle-type vehicle 100, that is, the rider-assistance operation that is executed when it is determined that the group travel mode is not valid. The case is where the validated rider-assistance operation is intended to assist the rider with driving in response to the event that only occurs behind the straddle-type vehicle 100, the acquisition section 21 only acquires the last corresponding information, and, in the valid state of the group travel mode, the last corresponding information acquired by the acquisition section 21 is the information indicating that the straddle-type vehicle 100 is the last vehicle in the group. In the case where the validated rider-assistance operation is intended to assist the rider with driving in response to the events that occur in front of and behind the straddle-type vehicle 100, the execution section 22 executes the first operation in response to the event that occurs behind the straddle-type vehicle 100, and executes the second operation in response to the event that occurs in front of the straddle-type vehicle 100. Here, the execution section 22 may execute the second operation (for example, the rider-assistance operation in which the area shifted to the left from the area in the first operation is the acquisition target of the surrounding environment information in the state where the vehicle line C1, to which the straddle-type vehicle 100 belongs, is located to the right in the lane L, the rider-assistance operation in which the area shifted to the right from the area in the first operation is the acquisition target of the surrounding environment information in the state where the vehicle line C1, to which the straddle-type vehicle 100 belongs, is located to the left in the lane L, or the like) in response to the event that occurs behind the straddle-type vehicle 100.

In the following case, the execution section 22 executes the first operation in response to the event that occurs behind the straddle-type vehicle 100, that is, the rider-assistance operation that is executed when it is determined that the group travel mode is not valid. The case is where the validated rider-assistance operation is intended to assist the rider with driving in response to the event that only occurs behind the straddle-type vehicle 100, the acquisition section 21 acquires the foremost corresponding information and the last corresponding information, in the valid state of the group travel mode, the foremost corresponding information acquired by the acquisition section 21 is the information indicating that the straddle-type vehicle 100 is not the foremost vehicle in the group, and the last corresponding information acquired by the acquisition section 21 is the information indicating that the straddle-type vehicle 100 is the last vehicle in the group. In the case where the validated rider-assistance operation is intended to assist the rider with driving in response to the events that occur in front of and behind the straddle-type vehicle 100, the execution section 22 executes the first operation in response to the event that occurs behind the straddle-type vehicle 100, and executes the second operation in response to the event that occurs in front of the straddle-type vehicle 100. Here, the execution section 22 may execute the second operation (for example, the rider-assistance operation in which the area shifted to the left from the area in the first operation is the acquisition target of the surrounding environment information in the state where the vehicle line C1, to which the straddle-type vehicle 100 belongs, is located to the right in the lane L, the rider-assistance operation in which the area shifted to the right from the area in the first operation is the acquisition target of the surrounding environment information in the state where the vehicle line C1, to which the straddle-type vehicle 100 belongs, is located to the left in the lane L, or the like) in response to the event that occurs behind the straddle-type vehicle 100.

### <Operation of Rider-Assistance System>

A description will be made on operation of the rider-assistance system according to the embodiment.

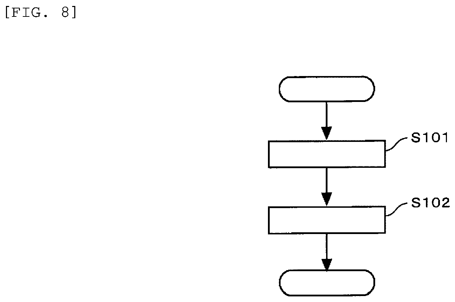

Fig. 8 is a chart for explaining an operation flow of the controller in the rider-assistance system according to the embodiment of the invention.

The controller 20 executes the operation flow illustrated in Fig. 8 during the travel of the straddle-type vehicle 100.

### (Acquisition Step)

In step S101, the acquisition section 21 acquires the positional relationship information between the straddle-type vehicle 100 and the target. In addition, in the case where it is determined that the group travel mode is valid, the acquisition section 21 acquires the positional information of the straddle-type vehicle 100 in the group. Furthermore, the acquisition section 21 acquires various types of information when necessary.

### (Execution Step)

In step S102, in the case where it is determined that the group travel mode is valid, the execution section 22 executes the rider-assistance operation to assist the rider of the straddle-type vehicle 100 on the basis of the positional relationship information between the straddle-type vehicle 100 and the target acquired in step S101 and the positional information of the straddle-type vehicle 100 in the group acquired in step S101.

### <Effects of Rider-Assistance System>

A description will be made on effects of the rider-assistance system according to the embodiment.

The controller 20 includes the execution section 22 that executes the rider-assistance operation to assist the rider of the straddle-type vehicle 100 on the basis of the positional relationship information between the straddle-type vehicle (the own vehicle) 100 and the target, and further includes the acquisition section 21 that acquires the positional information of the straddle-type vehicle 100 in the group in the case where the group travel mode as the mode in which the group formed of plural straddle-type vehicles 300, including the straddle-type vehicle 100, travels in the plural vehicle lines C1, C2 in the single lane L is determined to be valid. In the case where it is determined that the group travel mode is valid, the execution section 22 executes the rider-assistance operation on the basis of the positional information acquired by the acquisition section 21. Therefore, in a situation where the group formed of the plural straddle-type vehicles 300, including the straddle-type vehicle 100, travels in the plural vehicle lines C1, C2 in the single lane L, it is possible to execute the appropriate rider-assistance operation and thus to improve assistance performance for the rider.

Preferably, the positional information acquired by the acquisition section 21 includes the foremost corresponding information that is the information on whether the straddle-type vehicle 100 is the foremost vehicle in the group. In particular, in the case where the foremost corresponding information is the information indicating that the straddle-type vehicle 100 is the foremost vehicle in the group, the execution section 22 preferably executes the rider-assistance operation (the first operation) that is executed when it is determined that the group travel mode is not valid. With such control, the appropriate rider-assistance operation can be executed. Therefore, the assistance performance for the rider is improved.

Preferably, the positional information acquired by the acquisition section 21 includes the last corresponding information that is the information on whether the straddle-type vehicle 100 is the last vehicle in the group. In particular, the positional information acquired by the acquisition section 21 further includes the foremost corresponding information as the information on whether the straddle-type vehicle 100 is the foremost vehicle in the group. In the case where the foremost corresponding information is the information indicating that the straddle-type vehicle 100 is the foremost vehicle in the group, and the last corresponding information is the information indicating that the straddle-type vehicle 100 is the last vehicle in the group, the execution section 22 preferably executes the rider-assistance operation (the first operation) that is executed when it is determined that the group travel mode is not valid. With such control, the appropriate rider-assistance operation can be executed. Therefore, the assistance performance for the rider is improved.

Preferably, the positional information acquired by the acquisition section 21 includes the intermediate corresponding information that is the information on whether the straddle-type vehicle 100 is the intermediate vehicle in the group. In particular, the acquisition section 21 preferably acquires the intermediate corresponding information on the basis of: the foremost corresponding information as the information on whether the straddle-type vehicle 100 is the foremost vehicle in the group; and the last corresponding information as the information on whether the straddle-type vehicle 100 is the last vehicle in the group. With such control, the appropriate rider-assistance operation can be executed. Therefore, the assistance performance for the rider is improved.

Preferably, the acquisition section 21 acquires the travel road information, and in the case where the travel road information acquired by the acquisition section 21 is the information indicating the curved road, the execution section 22 executes the rider-assistance operation not on the basis of the positional information that is acquired at the time point of acquiring the travel road information. With such control, the appropriate rider-assistance operation can be executed. Therefore, the assistance performance for the rider is improved.

The description has been made so far on the embodiment. However, only a part of the embodiment may be implemented, parts of the embodiment may be combined, or a part of the embodiment may be modified to another aspect. In other words, the invention is not limited to the embodiment that has been described.

For example, the description has been made so far on the case where the acquisition section 21 acquires the positional information of the straddle-type vehicle 100 in the group on the basis of the surrounding environment information. However, the rider may input the setting of the position (for example, the first position, the last position, the intermediate position, or the like) of the straddle-type vehicle 100 in the group, and the acquisition section 21 may acquire the positional information of the straddle-type vehicle 100 in the group on the basis of the setting input information that is output from the setting input device 13.

For example, the description has been made so far on the case where, as the positional relationship adjustment operation, the execution section 22 executes the operation to adjust the positional relationship between the straddle-type vehicle 100 and the target in the length direction of the lane L. However, the execution section 22 may execute, as the positional relationship adjustment operation, operation to adjust positional relationship between the straddle-type vehicle 100 and the target in a width direction of the lane L. In such a case, preferably, the controller 20 outputs a command to a drive mechanism that is added to a steering system of the straddle-type vehicle 100, and executes the rider-assistance operation.

### Reference Signs List

1: Rider-assistance system
11: Surrounding environment sensor
12: Vehicle behavior sensor
13: Setting input device
20: Controller
21: Acquisition section
22: Execution section
30: Brake system
40: Drive system
50: Notification device
100: Straddle-type vehicle (own vehicle)
200: Other vehicle
300: Straddle-type vehicle
L: Lane
C1, C2: Vehicle line

## Claims

1. A controller (20) for a rider-assistance system (1) of a straddle-type vehicle (100), the controller comprising:
an execution section (22) that executes rider-assistance operation to assist a rider of an own vehicle (100) on the basis of positional relationship information between the own vehicle (100) and a target, and further comprising:
an acquisition section (21) that acquires positional information of the own vehicle (100) in a group in the case where a group travel mode as a mode in which a group formed of plural straddle-type vehicles (300), including the own vehicle (100), travels in plural vehicle lines (C1, C2) in a single lane (L) is determined to be valid, wherein
in the case where it is determined that the group travel mode is valid, the execution section (22) executes the rider-assistance operation on the basis of the positional information acquired by the acquisition section (21).

2. The controller according to claim **1,** wherein
the positional information includes foremost corresponding information that is information on whether the own vehicle (100) is a foremost vehicle in the group.

3. The controller according to claim 2, wherein
in the case where the foremost corresponding information is the information indicating that the own vehicle (100) is the foremost vehicle in the group, the execution section (22) executes the rider-assistance operation that is executed when it is determined that the group travel mode is not valid.

4. The controller according to claim 1, wherein
the positional information includes last corresponding information that is information on whether the own vehicle (100) is a last vehicle in the group.

5. The controller according to claim 4, wherein
the positional information further includes foremost corresponding information as information on whether the own vehicle (100) is a foremost vehicle in the group, and
in the case where the foremost corresponding information is the information indicating that the own vehicle (100) is the foremost vehicle in the group, and the last corresponding information is the information indicating that the own vehicle (100) is the last vehicle in the group, the execution section (22) executes the rider-assistance operation that is executed when it is determined that the group travel mode is not valid.

6. The controller according to claim 1, wherein
the positional information includes intermediate corresponding information that is information on whether the own vehicle (100) is an intermediate vehicle in the group.

7. The controller according to claim 6, wherein
the acquisition section (21) acquires the intermediate corresponding information on the basis of: foremost corresponding information as information on whether the own vehicle (100) is a foremost vehicle in the group; and last corresponding information as information on whether the own vehicle (100) is a last vehicle in the group.

8. The controller (20) according to any one of claims 2, 3, 5, and 7, wherein
the acquisition section (21) acquires the foremost corresponding information on the basis of information on presence or absence of another vehicle (200) that travels in front of the own vehicle (100).

9. The controller (20) according to any one of claims 2, 3, 5, and 7, wherein
the acquisition section (21) acquires the foremost corresponding information on the basis of positional relationship information between the own vehicle (100) and another vehicle (200) that travels in front of the own vehicle (100).

10. The controller (20) according to any one of claims 2, 3, 5, and 7, wherein
the acquisition section (21) acquires the foremost corresponding information on the basis of model information of another vehicle (200) that travels in front of the own vehicle (100).

11. The controller (20) according to any one of claims 4, 5, and 7, wherein
the acquisition section (21) acquires the last corresponding information on the basis of information on presence or absence of another vehicle (200) that travels behind the own vehicle (100).

12. The controller (20) according to any one of claims 4, 5, and 7, wherein
the acquisition section (21) acquires the last corresponding information on the basis of positional relationship information between the own vehicle (100) and another vehicle (200) that travels behind the own vehicle (100).

13. The controller (20) according to any one of claims 4, 5, and 7, wherein
the acquisition section (21) acquires the last corresponding information on the basis of model information of another vehicle (200) that travels behind the own vehicle (100).

14. The controller according to any one of claims 1 to 7, wherein
the acquisition section (21) acquires travel road information, and
in the case where the travel road information acquired by the acquisition section (21) is information indicating a curved road, the execution section (22) executes the rider-assistance operation not on the basis of the positional information that is acquired at a time point of acquiring the travel road information.

15. A control method for a rider-assistance system (1) of a straddle-type vehicle (100), the control method comprising:
an execution step (S102) in which an execution section (22) of a controller (20) executes rider-assistance operation to assist a rider of the own vehicle (100) on the basis of positional relationship information between the own vehicle (100) and a target, and further comprising:
an acquisition step (S101) in which an acquisition section (21) of the controller (20) acquires positional information of the own vehicle (100) in a group in the case where a group travel mode as a mode in which a group formed of plural straddle-type vehicles (300), including the own vehicle (100), travels in plural vehicle lines (C1, C2) in a single lane (L) is determined to be valid, wherein
in the execution step (S102), in the case where it is determined that the group travel mode is valid, the execution section (22) executes the rider-assistance operation on the basis of the positional information acquired in the acquisition step (S101).
